# EUROPEAN PATENT APPLICATION

(11) **EP 2 337 026 A1**
(43) Date of publication of application: **22.06.2011**
(21) Application number: 09306278.4
(22) Date of filing: 18.12.2009
(51) Int. Cl.: G11B 7/24, G11B 7/135, G03H 1/00, G11B 7/257

(54) **Optical recording medium and apparatus and method for reading from the medium**

(71) Applicant: Thomson Licensing, 92130 Issy-les-Moulineaux (FR)
(72) Inventor: Przygodda, Frank, 88045 Friedrichshafen (DE); Trautner, Heiko, 78089, Unterkirnach (DE); Knappmann, Stephan, 78658, Zimmern ob Rottweil (DE)
(74) Representative: Schmidt-Uhlig, Thomas

(57) **Abstract**

The present invention relates to an optical recording medium (16) and to an apparatus (1) and a method for reading from the optical recording medium (16). The optical recording medium (16) is provided with one or more polarization rotating films (32, 36). An apparatus for reading from the optical recording medium (16) includes a light source (2) for generating a polarized light beam (3, 6, 7) and one or more variable polarization rotating elements (19, 30), which are located in an optical path of the light beam (3, 6, 7) before the optical recording medium (16) .

## Description

The present invention relates to an optical recording medium, e.g. a holographic storage medium, and to an apparatus and a method for reading from the optical recording medium.

In the following reference is mainly made to holographic data storage. However, it is to be noted that the invention is not limited to holographic data storage. It is likewise applicable to other types of optical data storage using a rotating optical recording medium.

In holographic data storage, digital data is stored by recording the interference pattern produced by the superposition of two coherent laser beams. Where one beam, the so-called "object beam", is modulated by a spatial light modulator (SLM) and carries the information/data to be recorded, the second beam serves as a reference beam. The interference pattern leads to a modification of specific properties of the storage material, which depend on the local intensity of the interference pattern. Reading of a recorded hologram is performed by illuminating the hologram with the reference beam using the same conditions as during recording. This results in the reconstruction of the recorded object beam, the so called reconstructed object beam that is detected by a detector array.

One advantage of holographic data storage is an increased data capacity per volume and a higher data transfer rate. Instead of storing single bits, as it is known from conventional media such as CD or DVD, data is stored as data pages. Typically, a data page consists of a matrix of light-dark-patterns, i.e. a two dimensional binary array or an array of grey values, which code multiple bits. This allows to achieve an increased data rate in addition to the increased data storage density.

Conventional optical storage media only use a single or a few 2-dimensional layers for data storage. Contrary, in holographic data storage media the volume of the medium is used for storing data instead of a layer. Further, the volume of the material used for data storage is not completely exhausted when data is written to it. The advantage of holographic data storage is the possibility to store multiple data in the same volume. This is achieved e.g. by changing the angle between the object beam and the reference beam, called angle multiplexing. A further option, called shift multiplexing, applies a slight shift between subsequent holograms, which do overlap each other for the most part. Shift multiplexing is performed e.g. by movement of the storage material.

The reconstructed object beam is usually much weaker than the reference beam. Typically, the intensity of the reconstructed object beam is ∼10⁻³ times the intensity of the reference beam. Due to its low intensity the detection of the reconstructed object beam is a challenging task. This is even more the case if the reconstructed object beam suffers under interference effects with stray light inside the optical setup of the apparatus for holographic data stage. The result of such interference effects is a disturbed reconstructed object beam that in turn leads to data readout errors. To prevent such problems the total intensity of all disturbing reflections, which emerge from lens surfaces etc., should not significantly exceed the intensity of the reconstructed object beam.

Apart from disturbing reflections at lens surfaces also the surface of the holographic storage medium causes undesired reflections, which may superimpose the signal on the detector. A possibility to reduce undesired reflections at surfaces is to provide them with an antireflection coating. Typically, such coatings reduce the reflection by a factor of 3x10⁻³. Since each surface reflects a fraction of the reference beam, the total intensity of all reflections may nonetheless exceed the weak signal on the detector. In addition, antireflection coatings are rather expensive.

Accordingly, it is an object of the present invention to provide an optical recording medium as well as an apparatus and a method for reading data from the optical recording medium, which allow to prevent disturbing reflections to a large extent.

According to the invention, this object is achieved by an optical recording, which is provided with one or more polarization rotating films or layers on one or both surfaces or in the interior of the optical recording medium.

According to a further aspect of the invention, an apparatus for reading from the optical recording medium includes a light source for generating a polarized light beam and one or more variable polarization rotating elements, which are arranged in an optical path of the light beam before the optical recording medium.

According to still a further aspect of the invention, a method for reading from the optical recording medium has the steps of:
- generating a polarized light beam, and
- rotating a direction of polarization of the light beam with one or more variable polarization rotating elements in synchronism with a rotation of the optical recording medium.

The invention makes use of different polarization states of the light beam reflected from the optical recording medium and the undesired reflections for a reduction of unwanted reflections, which could otherwise disturb the signal on a detector. The idea is especially suitable for rotating optical recording media.

A main idea of the invention is to provide one or more polarization rotating films, e.g. a quarter-wave retarder film, on or inside the optical recording medium. In case a reflection-type optical recording medium a single polarization rotating film is sufficient. In case of a transmission-type optical recording medium two polarization rotating films are advantageously provided, one on each side of the optical recording medium. The advantage of a quarter-wave retarder film directly on or inside the optical recording medium is that reflections occurring from elements in the optical path upstream the quarter-wave retarder film are suppressed effectively. In particular reflections from the surfaces of the objective lens and the surface of the optical recording medium itself are suppressed, as they maintain their linear polarization when reflected backwards. Only light which passes through the quarter-wave retarder film changes its polarization from linear to circular. After reflection, the circular polarization changes its orientation, e.g. from left-hand to right-hand circular polarization. When the reflected light passes again through the quarter-wave retarder film, the polarization is changed back to linear, but perpendicular to the polarization of the incident light beam. Therefore, the desired reflected light from the optical recording medium can easily be separated from undesired reflections using, for example, a polarizing beam splitter.

In case of a disk-like rotating optical recording medium one or more variable polarization rotating elements are necessary in an apparatus for reading from the optical recording medium. These one or more variable polarization rotating elements compensate for the changing orientation of the one or more polarization rotating films during rotation of the optical recording medium. Apparently, in case of a non-rotating optical recording medium the orientation of the one or more polarization rotating films does not change. Therefore, no additional compensation elements are needed. Preferably, the variable polarization rotating elements are rotatable half-wave plates or liquid crystal elements. Such elements are readily available and can easily be implemented in the optical paths.

When one or more rotatable half-wave plates are used, a rotation of these half-wave plates is favorably adapted to a rotation of the optical recording medium. This allows to implement a mechanical synchronization of the rotation of the half-wave plates with the rotation of the optical recording medium.

Preferably, the apparatus further has one or more sensors and a controller for synchronizing the one or more variable polarization rotating elements with the optical recording medium. This solution is especially advantageous for exchangeable optical recording media, where the orientation of the one or more polarization rotating films does not have a fixed relation to the orientation of the variable polarization rotating elements.

Advantageously, the one or more sensors are adapted to generate trigger impulses from axes of driving motors for the optical recording medium and for the variable polarization rotating elements. This has the advantage that reliable sensors are readily available at low cost. Therefore, this solution does not incur excessive additional cost.

Alternatively, trigger impulses are generated from a light beam reflected from a surface of the optical recording medium. This has the advantage that it becomes easily possible to determine an absolute orientation of the one or more polarization rotating films of the optical recording medium. This in turns provides a simple possibility for synchronizing the rotation of the direction of polarization of the light beam with the rotation of the optical recording medium.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: illustrates a conventional apparatus for reading from a pit-based optical recording medium,
- Fig. 2: shows a detail of a counter-propagating holographic storage system derived from the apparatus of Fig. 1,
- Fig. 3: depicts a holographic storage medium according to the invention in a counter-propagating holographic storage system,
- Fig. 4: illustrates the change of the orientation of the fast axis of a quarter-wave plate arranged on a rotating holographic storage medium of Fig. 3,
- Fig. 5: depicts the compensation of the change of the orientation of the fast axis of the quarter-wave plate using rotating half-wave plates;
- Fig. 6: illustrates the application of the idea of Fig. 5 to a collinear holographic storage system with a reflectiontype holographic storage medium,
- Fig. 7: shows a first example of a rotation control loop,

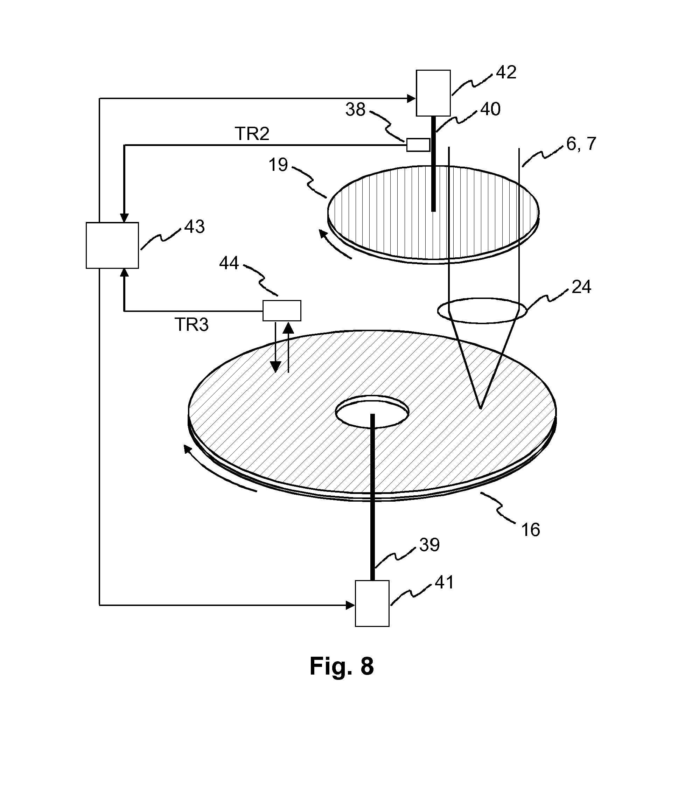

- Fig. 8: depicts a second example of a rotation control loop,
- Fig. 9: depicts a counter-propagating holographic storage system according to the invention, and
- Fig. 10: shows a collinear holographic storage system according to the invention.

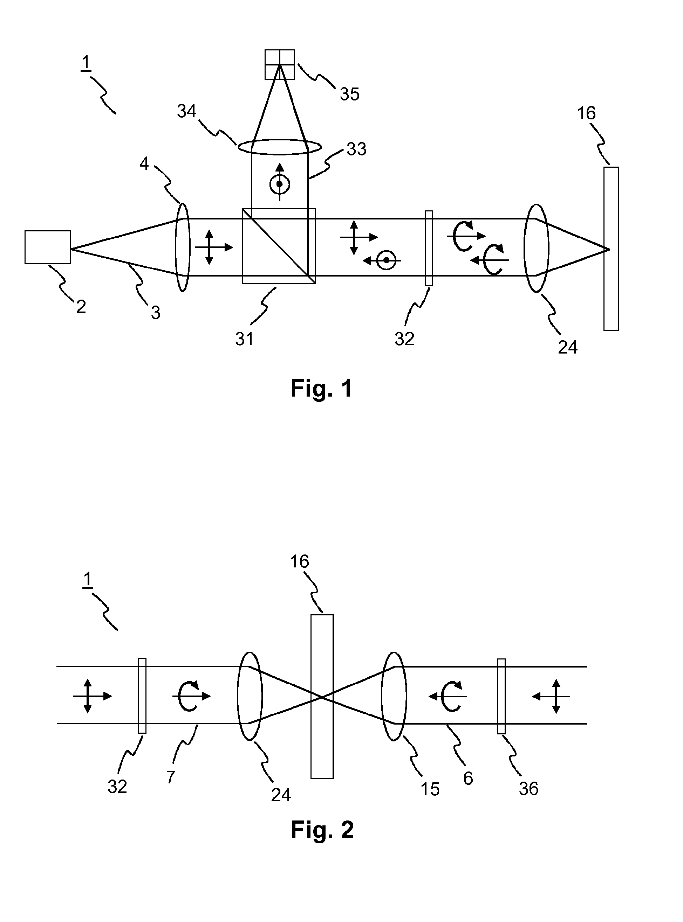

In an apparatus for reading from holographic storage media use is often made of a polarizing beam splitter in combination with a quarter-wave plate to direct the reconstructed object beam to the detector. This principle is very similar to a conventional apparatus 1 for reading from a pit-based optical recording medium 16. Such an apparatus 1 is schematically depicted in Fig. 1. A light source 2 emits a horizontally polarized light beam 3, which is collimated by a collimating lens 4. The light beam 3 passes through a polarizing beam splitter 31 and is then converted by a quarter-wave plate 32 to a circular polarized light beam 3. The light beam 3 is then focused on a data carrying layer of the optical recording medium 16 by an objective lens 24. The reflected light beam 33 has the opposite circular polarization. After passing again through the quarter-wave plate 32 the reflected light beam 33 is vertically polarized so that it is reflected by the polarizing beam splitter 31 towards a focusing lens 34, which focuses the reflected light beam 33 onto a detector 35, e.g. a four-quadrant detector.

Fig. 2 shows a detail of a counter-propagating holographic storage system 1, which is derived from the apparatus 1 of Fig. 1. A horizontally polarized reference beam 7 is transformed into a right-hand circular polarized reference beam 7 by a first quarter-wave plate 32 and is focused into the holographic storage medium 16 from the left side by an objective lens 24. A horizontally polarized object beam 6 is transformed into a left-hand circular polarized object beam 6 by a second quarter-wave plate 36 and is focused into the holographic storage medium 16 from the right side by a further objective lens 15. Since the reference beam 7 is circular polarized when passing through the objective lens 24 or through the surface of the holographic storage medium 16, possible reflections from these elements have the same polarization state as a reconstructed object beam and, therefore, also reach the detector 35.

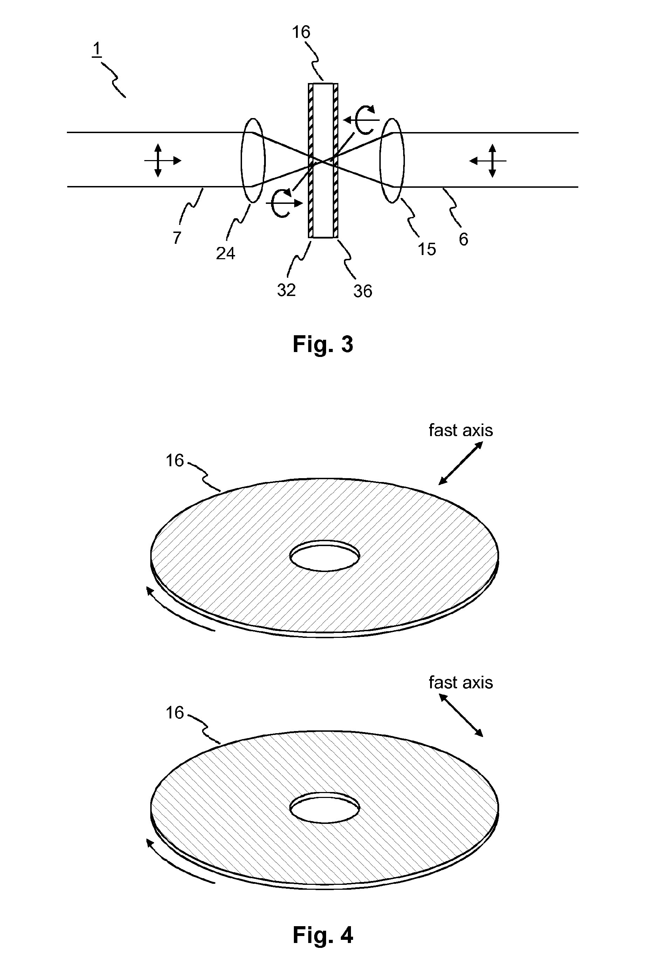

A solution to prevent reflections from reaching the detector is illustrated in Fig. 3, which depicts a holographic storage medium according to the invention in the counter-propagating holographic storage system. A main idea is to place the quarter-wave plates 32, 36 between the objective lenses 15, 24 and the holographic storage medium 16 or directly onto the holographic storage medium 16. In this case the reflections maintain their linear polarization and, consequently, pass through the polarizing beam splitter 31 instead of being directed to the detector 35. Advantageously thin quarter-wave retarder films is used instead of the relatively thick quarter-wave plates 32, 36, as such films are cheap and easy to apply to an optical recording medium 16. In addition, they are not very sensitive to the angle of incidence of the reference beam 7. The latter property is especially advantageous in case of a focused reference beam 7, which includes a plurality of angles. Apparently, for a collinear holographic storage system with a reflection-type holographic storage medium 16, only one side of the holographic storage medium 16 needs to be provided with a quarter-wave retarder film.

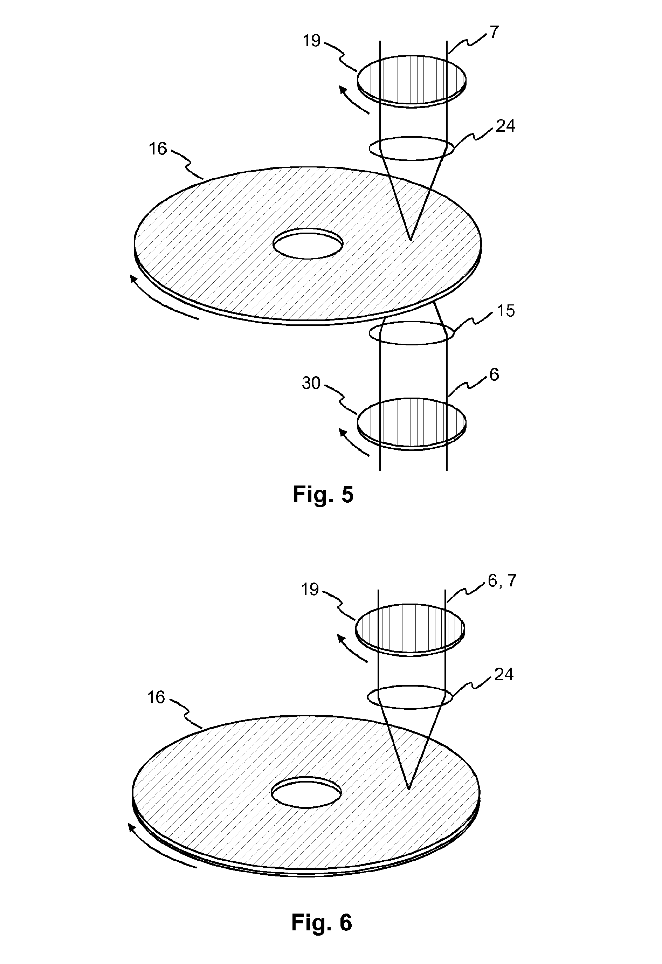

A special difficulty has to be overcome to realize the above proposed holographic storage medium 16. When a quarter-wave retarder film 32, 36 is placed on a rotating holographic storage medium 16, the orientation of its fast axis continuously changes during the rotation. This is schematically illustrated in Fig. 4. As the orientation of the quarter-wave retarder film 32, 36 has to be fixed relative to the polarization state of the incoming light beam 7, this rotation of the fast axis needs to be compensated. A possible solution is a rotating half-wave plate 19, 30 in the optical path before the quarter-wave retarder film 32, 36. This is schematically depicted in Fig. 5 for a counter-propagating holographic storage system 1 and in Fig. 6 for a collinear holographic storage system 1, where the holographic storage medium 16 has a reflective layer. The orientation of the half-wave plate 37, 38 is adjusted in such way that the polarization of the light beam 6, 7 after the half-wave plate 19, 30 has always the correct orientation relative to the quarter-wave retarder film 32, 36. Consequently, during reading or writing of data the orientation of the half-wave plate 19, 30 also changes continuously. More specifically, the rotation speed of the half-wave plate 19, 30 is exactly half of the rotation speed of the holographic storage medium 16. Instead of a rotating half-wave plate 19, 30 also an electro-optical element, e.g. based on liquid crystals, can be used to change the polarization state.

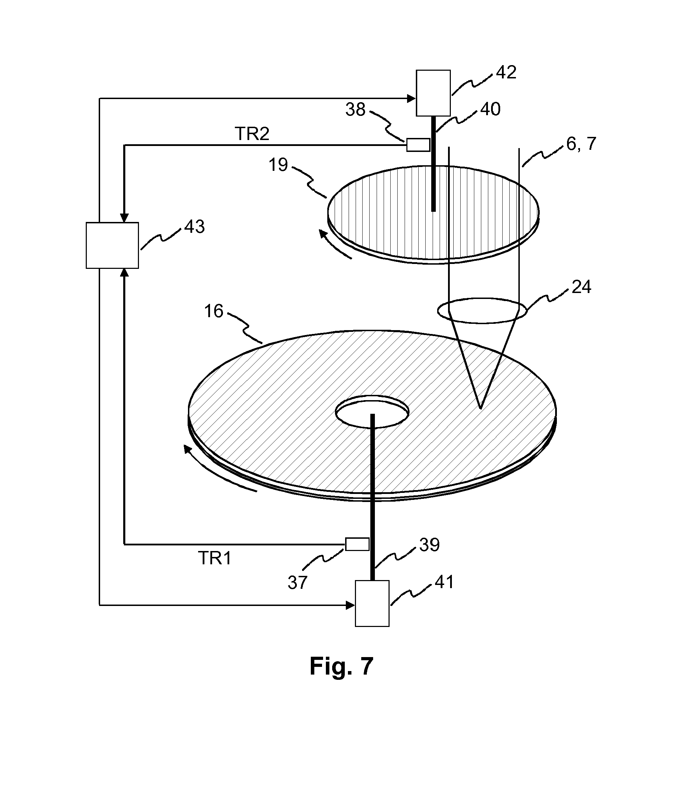

In order to synchronize the rotation of the holographic storage medium 16 and the rotating half-wave plate 19, 30 either the rotations are mechanically coupled or a control loop is provided. A first example of a control loop is depicted in Fig. 7. Trigger impulses TR1, TR2 are generated during rotation, which are preferably retrieved by sensors 37, 38 from the axes 39, 40 of the driving motors 41, 42, and which are sent to a controller 43. In case of exchangeable holographic storage media 16, the orientation of the quarter-wave retarder film 32, 36 with respect to the motor axis 39, and hence with respect to the trigger impulse TR1, is usually not fixed. The correct alignment of the half-wave plate 19, 30 relative to the quarter-wave retarder film 32, 36 is determined by measuring the intensity of the reconstructed object beam on the detector 35. This becomes maximal if the orientations are aligned with respect to each other. Alternatively, only the reference beam 7 and a reflected signal from a special mirror area (not shown) of the holographic storage medium 16 is used for determining the correct alignment.

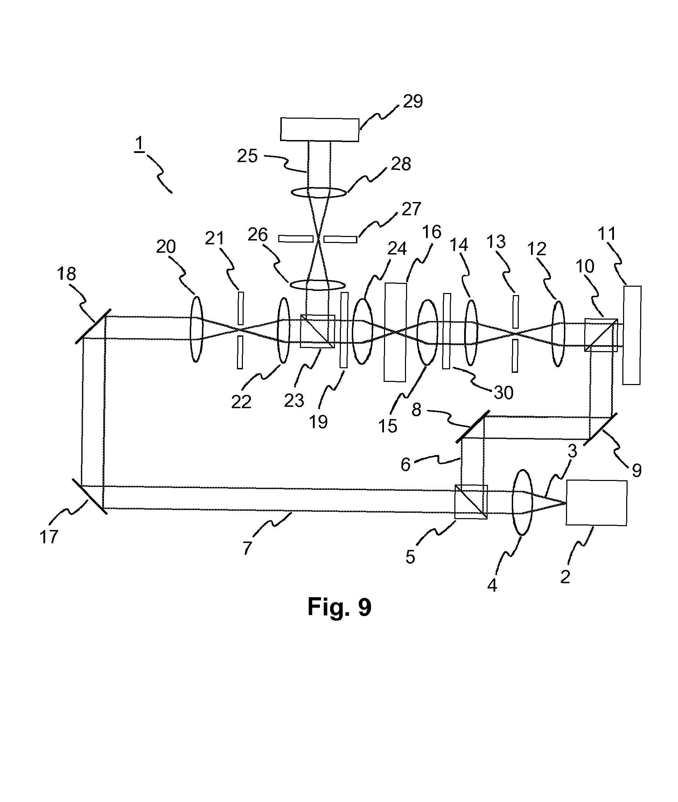

A further solution for the control loop, which is illustrated in Fig. 9, uses trigger impulses TR3, which are directly generated from the holographic storage medium 16. For this purpose, a photo sensor 44 working with polarized light is advantageously provided.

Fig. 9 illustrates a counter-propagating holographic storage system 1 according to the invention. A light source 2 emits a light beam 3, which is collimated by a collimating lens 4 and split by a first beam splitter 5 into an object beam 6 and a reference beam 7. For writing, the object beam 6 is directed via two mirrors 8, 9 and a second beam splitter 10 onto a reflective spatial light modulator 11, which imprints a data page, i.e. a data pattern, onto the object beam 6. The reflected object beam 6 passes through the second beam splitter 11, then through a first spatial filter consisting of two lenses 12, 14 and a filter aperture 13, and finally through a first rotatable half-wave plate 30. The object beam 6 is then focused by a first objective lens 15 into a holographic storage layer of a holographic storage medium 16 according to the invention. The reference beam 7 is directed towards the holographic storage medium 16 by two mirrors 17, 18. Before being focused into the holographic storage layer of the holographic storage medium 16 by a second objective lens 24, the reference beam 7 passes through a second spatial filter consisting of two lenses 20, 22 and a filter aperture 21a, and through a second rotatable half-wave plate 19. Due to the interference between the object beam 6 and the reference beam 7 a hologram is recorded in the holographic storage layer of the holographic storage medium 16.

For reading a hologram located in the holographic storage layer of the holographic storage medium 16, the hologram is illuminated with the reference beam 7 only. The resulting reconstructed object beam 25 is collimated by the second objective lens 24 and directed onto an array detector 29, e.g. a CCD camera, by a third beam splitter 23. Before it impinges on the array detector 29, the reconstructed object beam 25 passes through a third spatial filter consisting of two lenses 26, 28 and a filter aperture 27.

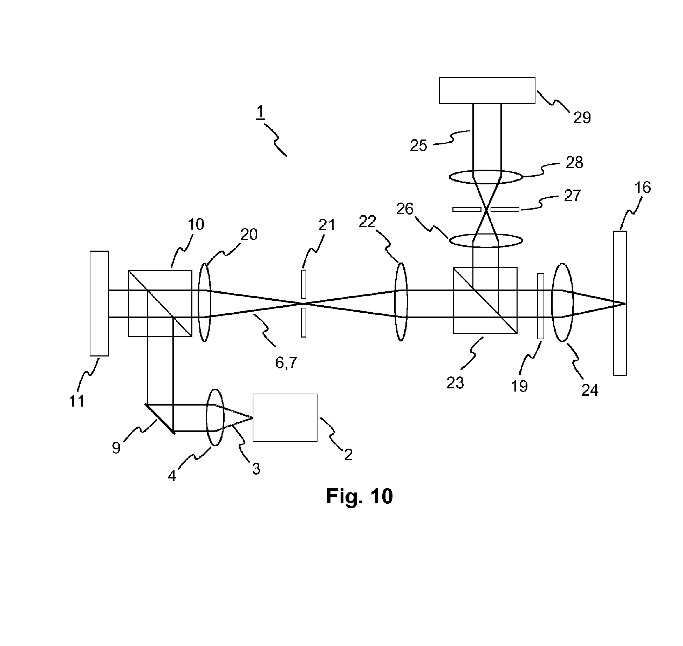

The solution according to the invention is likewise applicable to a collinear holographic storage system 1, where the reference beam 7 surrounds the object beam 6. Details on collinear holographic storage systems can be found, for example, in K. Tanaka et al.: "Improved performance in coaxial holographic data recording", Opt. Exp. Vol. 15 (2007), pp. 16196-16209. Such a system 1 is illustrated in Fig. 10. In this collinear holographic storage system 1 the reference beam 7 is generated by the spatial light modulator 11.

Though in the above description the invention has been explained for page-based holographic storage media, the general idea is likewise useful for other applications with a rotating optical recording medium, where a weak signal has to be detected. Examples of such applications are microhologram-based holographic storage media, multi-layer optical recording media, where the reflection from each layer is weak, Super-RENS optical recording media, or optical recording media for near-field storage.

## Claims

1. Optical recording medium (16), **characterized in that** the optical recording medium (16) is provided with one or more polarization rotating films (32, 36) on one or both surfaces or in the interior.

2. Optical recording medium (16) according to claim 1, **wherein** the one or more polarization rotating films (32, 36) are quarter-wave retarder films.

3. Optical recording medium (16) according to claim 1 or 2,
**wherein** the optical recording medium (16) is a reflection-type medium and is provided with a single polarization rotating film (32).

4. Optical recording medium (16) according to claim 1 or 2,
**wherein** the optical recording medium (16) is a transmission-type medium and is provided with two polarization rotating films (32, 36).

5. Optical recording medium (16) according to any of claims 1 to 4, **wherein** the optical recording medium (16) is a holographic storage medium, a multi-layer optical recording medium, a Super-RENS optical recording medium, or an optical recording medium for near-field storage.

6. Apparatus for reading from an optical recording medium (16) according to one of claims 1 to 5, with a light source (2) for generating a polarized light beam (3, 6, 7), **characterized in that** the apparatus includes one or more variable polarization rotating elements (19, 30) in an optical path of the light beam (3, 6, 7) upstream the optical recording medium (16).

7. Apparatus (1) according to claim 6, **wherein** the one or more variable polarization rotating elements (19, 30) are rotatable half-wave plates (19, 30).

8. Apparatus (1) according to claim 7, **wherein** a rotation of the one or more rotatable half-wave plates (19, 30) is adapted to a rotation of the optical recording medium (16).

9. Apparatus (1) according to claim 6, **wherein** the one or more variable polarization rotating elements (19, 30) are liquid crystal elements.

10. Apparatus according to one of claims 6 to 9, **further** having one or more sensors (37, 38, 44) and a controller (43) for synchronizing the one or more variable polarization rotating elements (19, 30) with the optical recording medium (16).

11. Apparatus (1) according to claim 10, **wherein** the one or more sensors (37, 38, 44) are adapted to generate trigger impulses (TR1, TR2) from axes (39, 40) of driving motors (41, 42) for the optical recording medium (16) and for the variable polarization rotating elements (19, 30), or to generate trigger impulses (TR3) from a light beam reflected from a surface of the optical recording medium (16).

12. Method for reading from an optical recording medium (16) according to one of claims 1 to 5, having the steps of:
- generating a polarized light beam (3, 6, 7), and
- rotating a direction of polarization of the light beam (3, 6, 7) with one or more variable polarization rotating elements (19, 30) in synchronism with a rotation of the optical recording medium (16).

13. Method according to claim 12, **further** having the step of determining an orientation of the one or more polarization rotating films (32, 36) of the optical recording medium (16) for synchronizing the rotation of the direction of polarization of the light beam (3, 6, 7) with the rotation of the optical recording medium (16).
